# EUROPEAN PATENT SPECIFICATION

(11) **EP 2 533 461 B1**
(45) Date of publication and mention of the grant of the patent: **13.07.2016**
(21) Application number: 11774298.1
(22) Date of filing: 25.02.2011
(51) Int. Cl.: H04L 12/24, H04W 84/18

(54) **METHOD AND SYSTEM FOR MANAGING SERVICE GROUP**
VERFAHREN UND SYSTEM ZUR VERWALTUNG EINER DIENSTGRUPPE
PROCÉDÉ ET SYSTÈME PERMETTANT DE GÉRER UN GROUPE DE SERVICES

(30) Priority: 30.04.2010 CN 201010165340
(43) Date of publication of application: 12.12.2012
(73) Proprietor: ZTE Corporation, Shenzhen, Guangdong 518057 (CN)
(72) Inventor: YAO, Lizhe, Shenzhen Guangdong 518057 (CN); XIE, Man, Shenzhen Guangdong 518057 (CN); CHEN, Jun, Shenzhen Guangdong 518057 (CN)
(74) Representative: Tischner, Oliver
(86) International application number: PCT/CN2011/071335
(87) International publication number: WO 2011/134307

(56) References cited:
- EP-A1- 1 717 963
- CN-A- 101 051 924
- CN-A- 101 223 710
- CN-A- 101 299 859
- US-A1- 2008 195 741
- US-A1- 2008 273 548
- JOHAN HJELM ET AL: "Revised CPNS functional interfaces ; OMA-CD-CPNS-2009-0096-CR_Revised_CPNS_Func tional_Interfaces", OMA-CD-CPNS-2009-0096-CR_REVISED_CPNS_FUNC TIONAL_INTERFACES, OPEN MOBILE ALLIANCE (OMA), 4330 LA JOLLA VILLAGE DR., SUITE 110 SAN DIEGO, CA 92122 ; USA , 31 December 2009 (2009-12-31), pages 1-8, XP064035449, Retrieved from the Internet: URL:ftp/Public_documents/CD/CPNS/2009/ [retrieved on 2009-12-31] & "Converged Personal Network Service Architecture ; OMA-AD-CPNS-V1_0-20091127-D", OMA-AD-CPNS-V1_0-20091127-D, OPEN MOBILE ALLIANCE (OMA), 4330 LA JOLLA VILLAGE DR., SUITE 110 SAN DIEGO, CA 92122 ; USA , no. 1.0 27 November 2009 (2009-11-27), pages 1-34, XP064036306, Retrieved from the Internet: URL:ftp/Public_documents/CD/CPNS/Permanent _documents/ [retrieved on 2009-11-27]
- SUNGJIN PARK ET AL: "PN Management Procedure and Message ; OMA-CD-CPNS-2010-0304R01-CR_PN_Management_ Message", OMA-CD-CPNS-2010-0304R01-CR_PN_MANAGEMENT_ MESSAGE, OPEN MOBILE ALLIANCE (OMA), 4330 LA JOLLA VILLAGE DR., SUITE 110 SAN DIEGO, CA 92122 ; USA , 29 September 2010 (2010-09-29), pages 1-11, XP064035830, Retrieved from the Internet: URL:ftp/Public_documents/CD/CPNS/2010/ [retrieved on 2010-10-06]

## Description

### TECHNICAL FIELD

The disclosure relates to a service group management technology, and particularly to a method and system for managing a service group in a personal network.

### BACKGROUND

With the development of technology, people own more and more personal devices such as handset, notebook, PDA, MP3 and MP4, which are produced with more and more functions. For instance, most of the personal devices have a short-distance communication capability, therefore, it is desired that the personal devices can be connected together to form a Personal Network (PN) to share resources and capabilities.

The document entitled "Revised CPNS functional interfaces; OMA-CD-CPNS-2009-0096-CR_Revised_CPNS_Functional_Interfaces" updates the current interface definition to reflect the functional architecture of CPNS, and discloses which functions of interfaces being re-used between different reference points are used and how. The document entitled "Converged Personal Network Service Architecture; OMA-AD-CPNS-V1_0-20091127-D" discloses the functional capabilities and information flows needed to support the enabler as described in CPNS requirements document. US 2008/273548 A1 (LEANO CHRISANTO DE JESUS [US] ET AL 6 November 2008) discloses a method and apparatus for configuring service groups in a cable network which comprises identifying a primary downstream channel in a cable network and indentifying a plurality of fiber nodes fed by the primary downstream channel.

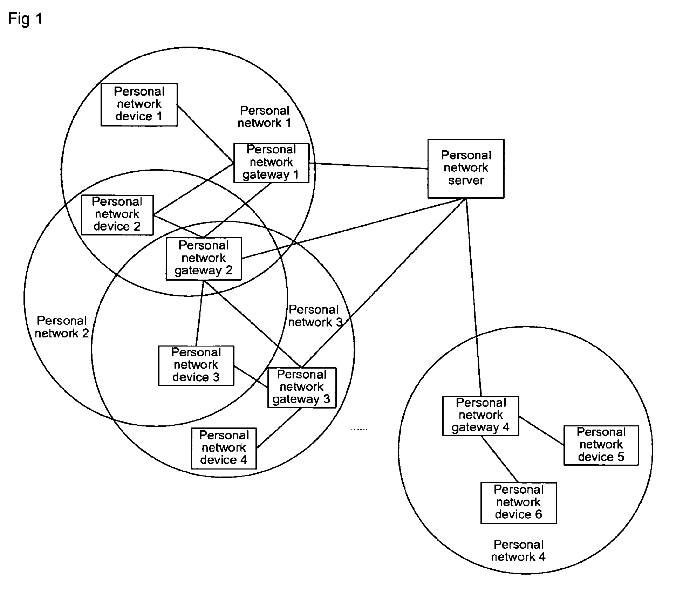

Fig. 1 is a schematic diagram illustrating a construction of a network between the devices in a PN, as shown in Fig. 1, the PN includes PN devices, a PN gateway and a PN server, which are in the following network construction relationship: PN 1 consists of PN gateway 1, PN device 1 and PN device 2; PN 2 consists of PN gateway 2, PN device 2 and PN device 3; PN 3 consists of PN gateway 3, PN device 3 and PN device 4; and PN 4 consists of PN gateway 4, PN device 5 and PN device 6. Each PN is connected with the PN server via the PN gateway thereof, and the PN server is connected with a service/content server. In Fig. 1, PN gateway 1 and PN gateway 2 are adjacent to each other, PN gateway 2 and PN gateway 3 are adjacent to each other; PN device 2 belongs to both the PN 1 and the PN 2, and PN device 3 belongs to both PN 2 and PN 3.

However, with the number of PN devices in a PN continuously increasing, how to manage the service group consisting of the PN devices effectively becomes an urgent problem to be solved, and no effective solution to this problem has been provided.

### SUMMARY

In view of this problem, the main object of the disclosure is to provide a method and system for managing a service group to realize a convenient and effective management of the service group.

In order to achieve the purpose above, the technical scheme of the disclosure is realized as follows:
a method for managing a service group includes: the service group is managed by establishing the service group and an information table thereof and the service group and the information table thereof are updated.

In the method, the information table may be an information table for managing the service group, the information table may include at least one of: a name of the service group, an identifier of the service group, strategy information, member information and service type information;
when updating the service group, the method may further include each of the following: a PN device is added to the service group, a PN device is enabled to leave the service group, the service group is deleted, and the information table is updated; wherein when the PN device is added to the service group, or the PN device is enabled to leave the service group, or deleting the service group, a caused update of the related information of the service group is achieved by updating the established information table, wherein
wherein adding the PN device to the service group includes: a PN server receives a request of the PN device for joining the service group, it is determined that joining the service group is allowed, and then the PN device is added to the service group, and the related information of the service group is updated;
wherein enabling the PN device to leave the service group includes: the PN server receives a request for enabling the PN device to leave the service group, deletes the PN device from the service group and updates the related information of the service group;
the deleting the service group includes: the PN server determines that the service group can be deleted successfully according to a response of each PN device to a request for deleting the service group, and deletes the service group.

In the method, establishing the service group may include: the personal network (PN) server establishes the service group directly according to a request for establishing the service group, and an invitation is sent to each invited PN device when there are invited PN devices that are invited to join the service group, wherein when establishing the service group, the method may further include: the information table is established for the service group.

In the method, establishing the service group may include: the PN server determines that the service group can be established successfully according to a response of each invited PN device to the request for establishing the service group and related information of the service group, and the service group is established; wherein when establishing the service group, the method may further include: the information table is established for the service group.

In the method, when a PN gateway is triggered to initiate the request for establishing the service group, the method may further include:
the PN gateway sends the request for establishing the service group and the related information of the service group to the PN server; the PN server sends the request for establishing the service group and the related information of the service group to each PN device corresponding to a member in the service group; and the PN server establishes the service group when the PN server determines that the service group can be established successfully according to the response returned from each PN device; or
when the PN device is triggered to initiate the request for establishing the service group, the method may further include:
   the PN device sends the request for establishing the service group and the related information of the service group to the PN gateway to which the PN device belongs; the PN gateway sends the request for establishing the service group and the related information of the service group to the PN server; the PN server sends the request for establishing the service group and the related information of the service group to each PN device corresponding to a member in the service group; and the PN server establishes the service group when the PN server determines that the service group can be established successfully according to the response returned from each PN device; or
   when the PN server is triggered to initiate the request for establishing the service group, the method may further include:
      the PN server sends the request for establishing the service group and the related information of the service group to each PN device corresponding to a member in the service group, and establishes the service group when the PN server determines that the service group can be established successfully according to the response returned from each PN device.

In the method, when the PN gateway or the PN device is triggered to send the request for establishing the service group and the related information of the service group, the method may further include: sending the related information of the service group by including it in the request for establishing the service group or sending the related information of the service group and the request for establishing the service group separately.

In the method, when a PN gateway is triggered to initiate the request for deleting the service group, the method may further include:
the PN gateway sends the request for deleting the service group to the PN server; the PN server sends the request for deleting the service group to each PN device corresponding to a member in the service group; and the PN server deletes the service group when the PN server determines that the service group can be deleted successfully according to the response returned from each PN device; or
when the PN device is triggered to initiate the request for deleting the service group, the method may further include:
   the PN device sends the request for deleting the service group to the PN gateway to which the PN device belongs; the PN gateway sends the request for deleting the service group to the PN server; the PN server sends the request for deleting the service group to each PN device corresponding to a member in the service group; and the PN server deletes the service group when the PN server determines that the service group can be deleted successfully according to the response returned from each PN device; or
   when the PN server is triggered to initiate the request for deleting the service group, the method may further include:
      the PN server sends the request for deleting the service group to each PN device corresponding to a member in the service group, and deletes the service group when the PN server determines that the service group can be deleted successfully according to the response returned from each PN device.

In the method, when the PN gateway or the PN device is triggered, and before the request for deleting the service group is sent, the method may further include: requesting the related information of the service group from the PN server;
when the PN gateway or the PN device is triggered, the method may further include, when sending the request for deleting the service group, carrying an identifier of the service group to be deleted in the request for deleting the service group.
when a PN device initiates a request for joining the service group initiatively, the method may further include:
the PN device sends the request for joining the service group to a PN gateway to which the PN device belongs; the PN gateway sends the request for joining the service group to the PN server; the PN server adds the PN device to the service group when the PN server determines that joining the service group is allowed and updates the related information of the service group, and then sends the updated related information of the service group to each PN device corresponding to a member in the service group; or
when a PN device is invited by another PN device to join the service group by initiating a request for inviting the PN device to join the service group, the method may further include:
   the another PN device sends the request for inviting the PN device to join the service group to the PN gateway to which the another PN device belongs; the PN gateway sends the request for inviting the PN device to join the service group to the PN server; the PN server adds the PN device to the service group when the PN server determines that joining the service group is allowed and updates the related information of the service group, and then sends the updated related information of the service group to each PN device corresponding to a member in the service group; or
   when a PN device is invited by the PN server to join the service group by initiating a request for inviting the PN device to join the service group, the method may further include:
      the PN server sends a request for inviting the PN device to join the service group to the PN gateway to which the PN device belongs; the PN server adds the PN device to the service group when the PN server determines that joining the service group is allowed and updates the related information of the service group, and then sends the updated related information of the service group to each PN device corresponding to a member in the service group.
      when a PN device initiates a request for leaving the service group initiatively, the method may further include:
         the PN device sends the request for leaving the service group to the PN gateway to which the PN device belongs; the PN gateway sends the request for leaving the service group to the PN server; the PN server deletes the PN device from the service group and updates the related information of the service group, and then sends the updated related information of the service group to each PN device corresponding to a member in the service group; or
         when a PN device is requested by another PN device to leave the service group by initiating a request for requesting the PN device to leave the service group, the method may further include:
            another PN device sends the request for requesting the PN device to leave the service group to the PN gateway to which the another PN device belongs; the PN gateway sends the request for requesting the PN device to leave the service group to the PN server; the PN server deletes the PN device from the service group when the PN server determines that leaving from the service group is allowed, updates the related information of the service group, and then sends the updated related information of the service group to each PN device corresponding to a member in the service group; or
            when a PN device is requested by the PN server to leave the service group by initiating a request for requesting the PN device to leave the service group, the method may further include:
               the PN server sends the request for requesting the PN device to leave the service group to the PN gateway to which the PN device belongs; the PN server deletes the PN device from the service group, updates related information of the service group, and then sends the updated related information of the service group to each PN device corresponding to a member in the service group.

A system for managing a service group includes: a management unit configured to manage the service group by establishing the service group and the information table thereof and updating the service group and the information table thereof;
when updating the service group, the management unit may further be configured to add a PN device to the service group, enable a PN device to leave the service group, delete the service group, and update the information table, wherein when adding the PN device to the service group, or enabling the PN device to leave the service group, or deleting the service group, a caused update of the related information of the service group is achieved by updating the established information table, wherein the management unit is a PN server;
wherein adding the PN device to the service group may include: the PN server receives a request of the PN device for joining the service group, determines that joining the service group is allowed, and then adds the PN device to the service group and updates the related information of the service group;
wherein enabling the PN device to leave the service group may include: the PN server receives a request for enabling the PN device to leave the service group, deletes the PN device from the service group and updates the related information of the service group;
wherein deleting the service group may include: the PN server determines that the service group can be deleted successfully according to a response of each PN device to a request for deleting the service group, and deletes the service group.

In the system, the information table is an information table for managing the service group, the information table includes at least one of: a name of the service group, an identifier of the service group, strategy information, member information and service type information.

In the system, when the management unit is further configured to establish the service group, the personal network (PN) server determines that the service group can be established successfully according to a response of each invited device to a request for establish the service group and related information of the service group, and establishes the information table for the service group.

By establishing and updating a service group and the information table thereof, the disclosure achieves the management of the service group.

Due to the disclosure, convenient and effective management can be performed on a service group consisting of a great number of PN devices including the establishing of a service group and the information table thereof, and the update on the service group and the information table thereof.

### BRIEF DESCRIPTION OF THE DRAWINGS

Fig.1 is a schematic diagram illustrating the network construction between the devices in a PN in the prior art;
Fig. 2 is a schematic diagram illustrating the establishing of a service group in the disclosure;
Fig. 3 is a schematic diagram illustrating the establishing of a service group included before a4 shown in Fig. 2;
Fig. 4 is another schematic diagram illustrating the establishing of a service group in the disclosure;
Fig. 5 is a schematic diagram illustrating the deletion of a service group in the disclosure;
Fig. 6 is a schematic diagram illustrating the acquisition of service group information in the disclosure;
Fig. 7 is another schematic diagram illustrating the deletion of a service group in the disclosure;
Fig. 8 is a schematic diagram illustrating the addition of a device to a service group in the disclosure;
Fig. 9 is another schematic diagram illustrating the addition of a device to a service group in the disclosure;
Fig. 10 is still another schematic diagram illustrating the addition of a device to a service group in the disclosure;
Fig. 11 is a schematic diagram illustrating the leaving of a device from a service group in the disclosure;
Fig. 12 is another schematic diagram illustrating the leaving of a device from a service group in the disclosure;
Fig. 13 is still another schematic diagram illustrating the leaving of a device from a service group in the disclosure.

### DETAILED DESCRIPTION OF THE EMBODIMENTS

The basic idea of the disclosure lies in that a service group is managed by establishing and updating a service group and the information table thereof.

The implementation of the technical scheme of the disclosure is described below in detail with reference to accompanying drawings.

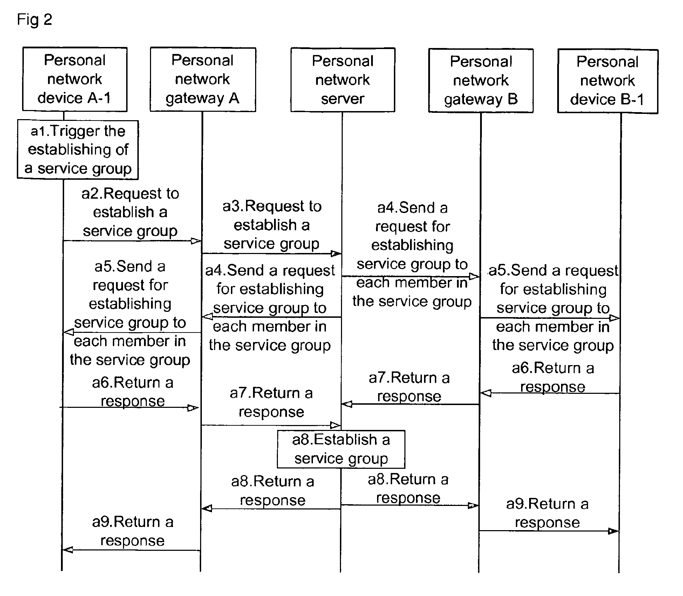

A method for managing a service group mainly includes the following processes:
1. The establishing of a service group, which includes the following two cases:
   Case 1: the establishing of a service group by a PN device (including a PN gateway), as shown in Fig. 2, mainly comprises the following steps:
      a1, PN device A-1 is triggered to establish a service group.
      a2, PN device A-1 sends a request for establishing the service group and related information of the service group to PN gateway A to which PN device A-1 belongs, wherein
         the related information of the service group may be included in the request for establishing the service group to be sent with the request for establishing the service group, or the related information of the service group is sent separately from the request for establishing the service group, without being included in the request for establishing the service group. The related information of the service group is the information used to establish the service group, and no repeated description is given here.
      a3, PN gateway A sends the request for establishing the service group and the related information of the service group to a PN server.
      a4, the PN server sends the request for establishing the service group and the related information of the service group to each invited member according to the received related information of the service group.
      a5, the PN gateway receives the request from the PN server and then sends the received request to a corresponding PN device in the PN in which the PN gateway is located.
      a6, the PN device returns a response to the PN gateway that the PN device belongs to.
      a7, the PN gateway returns a response to the PN server according to the response of the PN device.
      a8, the PN server determines whether or not the service group is successfully established according to the response from each invited PN device, returns a response to each PN device in the service group, and establishes a corresponding service group when the service group is successfully established.
      a9, the PN gateway returns, according to the response received from the PN server, a response to a corresponding PN device in the PN in which the PN gateway is located.

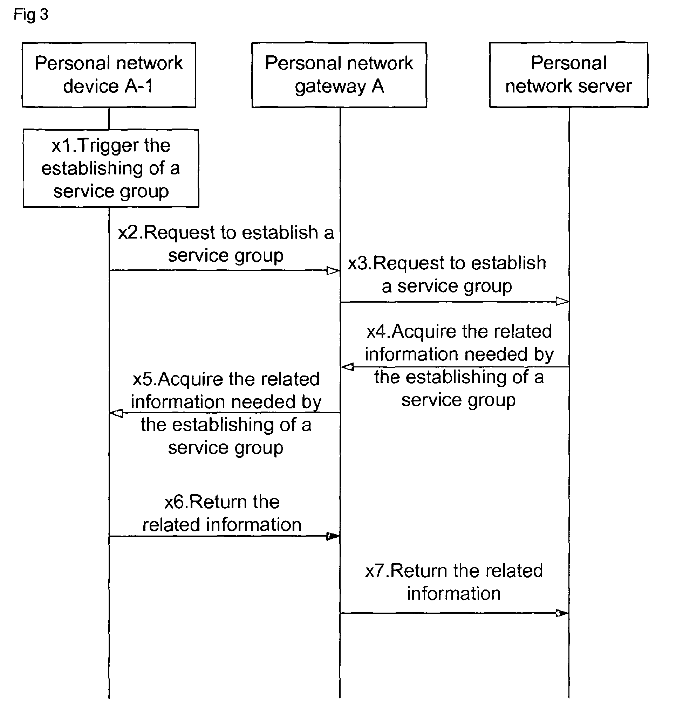

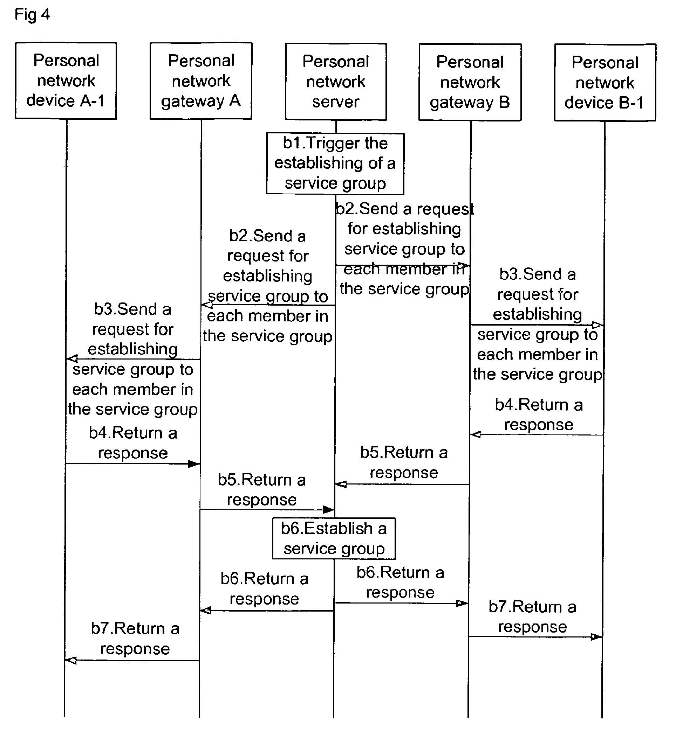

      Here, in the Step a1 above, there may be many triggering conditions, such as a user, a server or a request from a third party.
      Here, in the Step a2 above, the related information of the service group includes member information, strategy information and service type information.
      Here, in the Steps a2 and a3 above, the related information of the service group may be sent separately from the request for establishing the service group, and this situation will be described later in detail.
      Here, in the Step a8, how to determine by the PN server whether or not the service group is successfully established according to the response of each PN device may be based on the actual situation, for example, different configurations may be used according to the type of the service group, for instance, the PN server determines the service group is successfully established when all PN devices, or at least one PN device, agree/agrees to the establishing, or no matter whether or not there is a PN device agreeing to the establishing. For the last case, the determination process described in Step a8 may be omitted, and the PN server can establish the service group directly.
      The different configurations based on the actual situation are correlated to the related information of the service group, specifically, to the strategy information and/or service type information. No related repeated description is given here.
      Here, in the Step a8, establishing a corresponding service group includes establishing an information table for managing the service group, wherein the name or identifier of the service group, the related strategy of the service group and a list of the members or device in the service group may be contained in the information table.
      Here, the change (or referred to as update) in the information of the service group caused by the subsequent deletion of the service group, the addition of a device to the service group, the leaving of a device from the service group is implemented by changing the information in the information table. It should be noted here that this scheme further includes updating the information table, besides deleting the service group, adding a device to the service group and enabling a device to leave the service group when updating the service group. For instance, the information table is updated due to that the strategy of the service group is updated by a user or a system, although no device is added or leaves.
      Here, the information contained in the response returned in the Step a9 may contain the related information of the successfully established service group.
      Here, if the establishing of the service group is initiated by PN gateway A, then the first two steps in the Steps a1-a9 are omitted.
      Here, as shown in Fig. 3, the following other processes may be included before the a4:
      x1, a PN device A-1 is triggered to establish a service group.
      x2, PN device A-1 sends a request for establishing the service group to PN gateway A to which PN device A-1 belongs.
      x3, PN gateway A sends the request for establishing the service group to a PN server.
      x4, the PN server returns a response to PN gateway A to request to acquire the related information of the service needed by the establishing the service group.
      x5, PN gateway A returns a response to PN device A-1 to request to acquire the related information of the service needed by the establishing the service group.
      x6, PN device A-1 returns the related information of the service group to PN gateway A.
      x7, PN gateway A returns the related information of the service group to the PN server.
   Case 2: the establishing of a service group by a PN server, as shown in Fig. 4, mainly comprises the following steps:
      b1, the PN server is triggered to establish a service group.
      b2, the PN server sends a request for establishing the service group and related information of the service group to each member in the service group.
      b3, a PN gateway receives the request from the PN server and then sends the received request to a corresponding PN device in the PN in which the PN gateway is located.
      b4, the PN device returns a response to the PN gateway to which PN device belongs.
      b5, the PN gateway returns a response to the PN server according to the response of the PN device.
      b6, the PN server determines whether or not the service group is successfully established according to the response of each PN device, returns a response to each PN device in the service group, and establishes a corresponding service group if the service group is successfully established.
      b7, the PN gateway returns, according to the response received from the PN server, a response to a corresponding PN device in the PN in which the PN gateway is located.

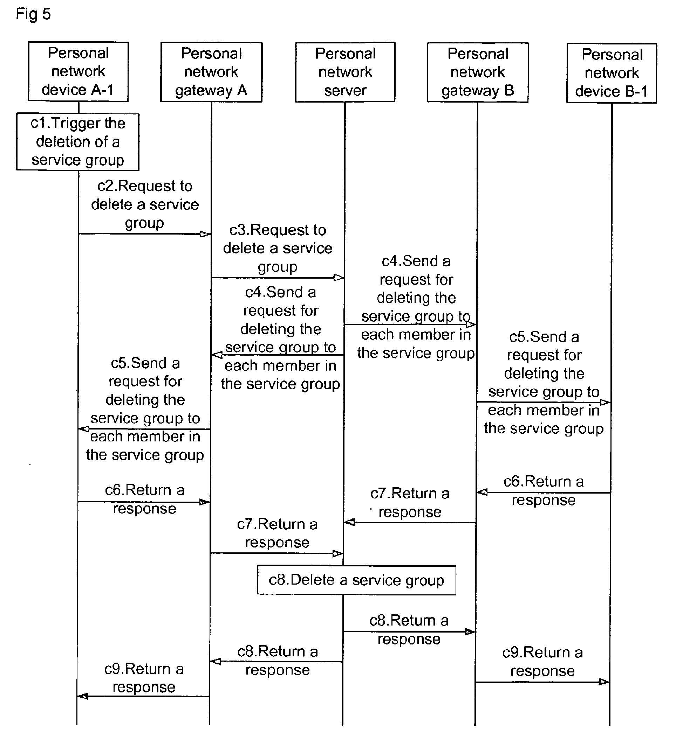

      Here, in the Step b1 above, there may be many triggering conditions, such as an operator or a request from a third party.
      Here, in the Step b2 above, the related information of the service group includes member information, strategy information and service type information.
      Here, in the Step b6 above, how to determine by the PN server whether or not the service group is successfully established according to the response of each PN device may be based on actual situation, for example, different configurations may be used according to the type of the service group, for instance, the PN server determines the service group is successfully established when all PN devices, or at least one PN device agree/agrees to the establishing, or no matter whether there is a PN device agreeing to the establishing.
      Here, in the Step b6 above, establishing a corresponding service group includes assigning a name and storing related information for the service group.
      Here, the information contained in the response returned in the Step b7 may contain the related information of the successfully established service group.
2. The deletion of a service group, which includes the following two cases:
   Case 1: the deletion of a service group initiated by a PN device (including PN gateway), as shown in Fig. 5, mainly comprises the following steps:
      c1, PN device A-1 is triggered to delete a service group.
      c2, PN device A-1 sends a request for deleting the service group to PN gateway A to which PN device A-1 belongs.
      c3, PN gateway A sends the request for deleting the service group to a PN server.
      c4, the PN server sends the request for deleting the service group to each member in the service group according to the received request.
      c5, a PN gateway receives the request from the PN server and then sends the received request to a corresponding PN device in the PN in which the PN gateway is located.
      c6, the PN device returns a response to the PN gateway to which the PN device belongs.
      c7, the PN gateway returns a response to the PN server according to the response of the PN device.
      c8, the PN server determines whether or not the service group is successfully deleted according to the response of each PN device, returns a response to each PN device in the service group, and deletes a corresponding service group when the service group is successfully deleted.
      c9, the PN gateway returns, according to the response received from the PN server, a response to a corresponding PN device in the PN in which the PN gateway is located.

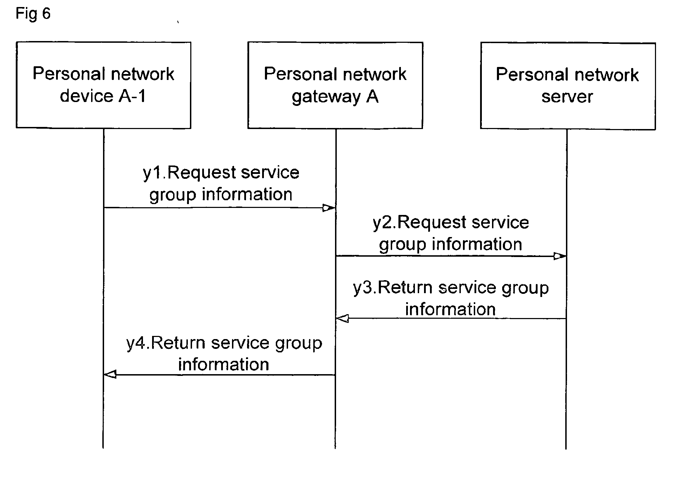

      Here, in the Step c1 above, there may be many triggering conditions, such as a user, server or a third party request.
      Here, in the Step c2 above, the identifier of the deleted service group should be provided.
      Here, before the Step c2 above, the PN device may need to acquire the information of an available service group, and this situation will be described later in detail.
      Here, in the Step c4 above, the sending of the request for deleting the service group to the device initiating the request can be omitted if the device is contained in the service group.
      Here, in the Step c8 above, how to determine by the PN server whether or not the service group is successfully deleted according to the response of each PN device may be based on the actual situation, for example, different configurations may be used according to the type of the service group, for instance, the PN server determines the service group is deleted only if all PN devices agree to the deletion or the PN server deletes the service group forcedly. In the case of a forced deletion, the Steps c4-c9 above can be omitted, that is, in the case of a forced deletion, the confirmation by each device is unnecessary, the service group can be deleted directly, and a notification is sent to the members in the service group.
      Here, if the deletion of a service group is initiated by PN gateway A, the first two steps in the Steps c1-c9 are omitted.
      Here, as shown in Fig. 6, the service group information acquisition that may be included before the Step c2 includes the following steps:
      y1, PN device A-1 sends a service group information acquisition request to a PN gateway A.
      y2, PN gateway A sends the service group information acquisition request to a PN server.
      y3, the PN server returns the information of the service group to PN gateway A.
      y4, PN gateway A returns the information of the service group to PN device A-1.

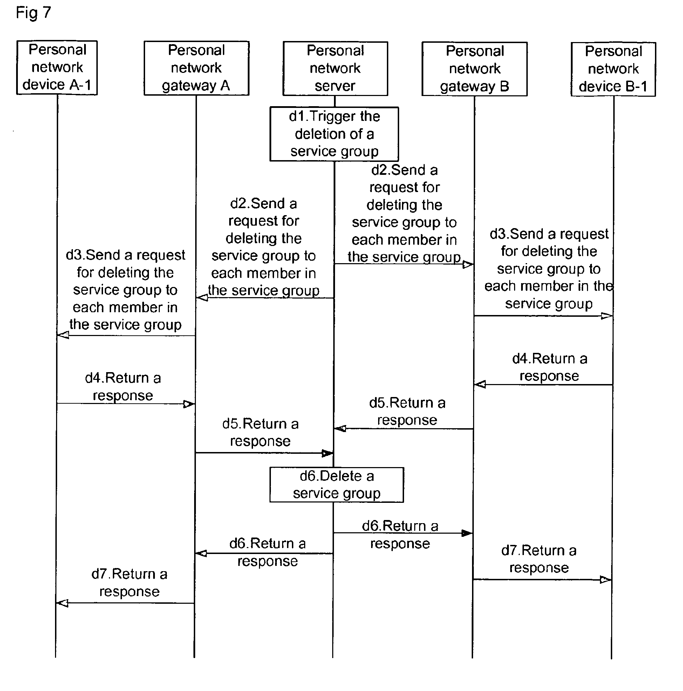

      Here, in the Steps y1-y4 above, if the information of the service group is stored in PN gateway A, then the information of the service group can be directly returned to PN device A-1, without being requested from the PN server.
   Case 2: the deletion of a service group is initiated by a PN server, as shown in Fig. 7, mainly comprises the following steps:
      d1, the PN server is triggered to delete a service group.
      d2, the PN server sends a request for deleting the service group to each member in the service group.
      d3, a PN gateway receives the request from the PN server and then sends the received request to a corresponding PN device in the PN in which the PN gateway is located.
      d4, the PN device returns a response to the PN gateway to which PN device belongs.
      d5, the PN gateway returns a response to the PN server according to the response of the PN device.
      d6, the PN server determines whether or not the service group is successfully deleted according to the response of each PN device, returns a response to each PN device in the service group, and deletes a corresponding service group when it determines the service group is successfully deleted.
      d7, the PN gateway, according to the response received from the PN server, a corresponding PN device in the PN in which the PN gateway is located.

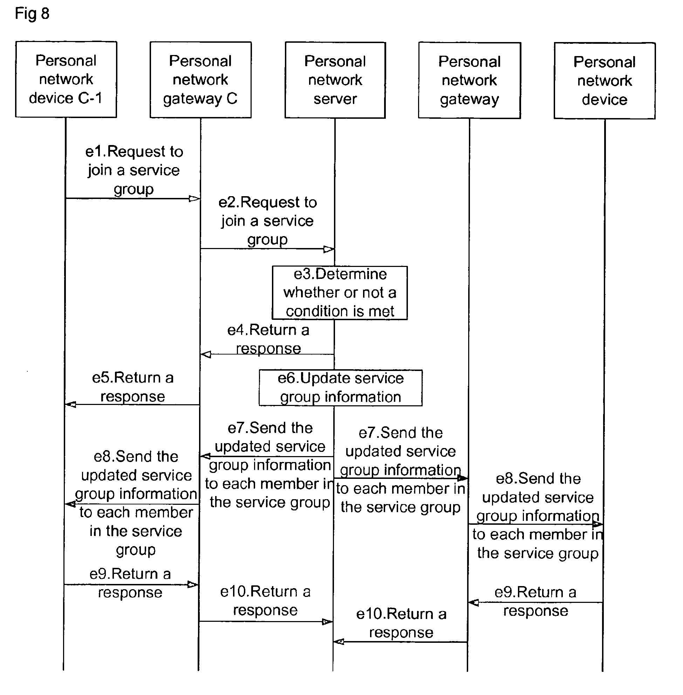

      Here, in the Step d1 above, there may be many triggering conditions, such as an operator or a third party request.
      Here, in the Step d6 above, how to determine by the PN server whether or not the service group is successfully deleted according to the response of each PN device may be based on the actual situation, for example, different configurations may be used according to the type of the service group, for instance, the PN server determines the service group is deleted only if all PN devices agree to the deletion, or the PN server deletes the service group forcedly. In the case of a forced deletion, the Steps d2-d7 above can be omitted, that is, in the case of a forced deletion, the confirmation by each device is unnecessary, the service group can be deleted directly, and a notification is sent to the members in the service group.
3. The addition of a device to a service group, which includes the following three cases:
   Case 1: a device initiatively requests to join a service group, as shown in Fig. 8, the joining of a device to a service group mainly includes the following steps:
      e1, PN device C-1 requests to join a service group.
      e2, PN gateway C sends the request to a PN server.
      e3, the PN server determines whether or not the device meets a service group joining condition.
      e4, the PN server returns a response to PN gateway C according to the result of the determination.
      e5, PN gateway C sends the response to PN device C-1.
      e6, the PN server updates the information of the service group if the device joins the service group.
      e7, the PN server sends the updated information of the service group to each member in the service group.
      e8, a PN gateway receives the information and then sends the received information to a PN device.
      e9, the PN device returns a response to a PN gateway.
      e10, the PN device returns a response to the PN server.

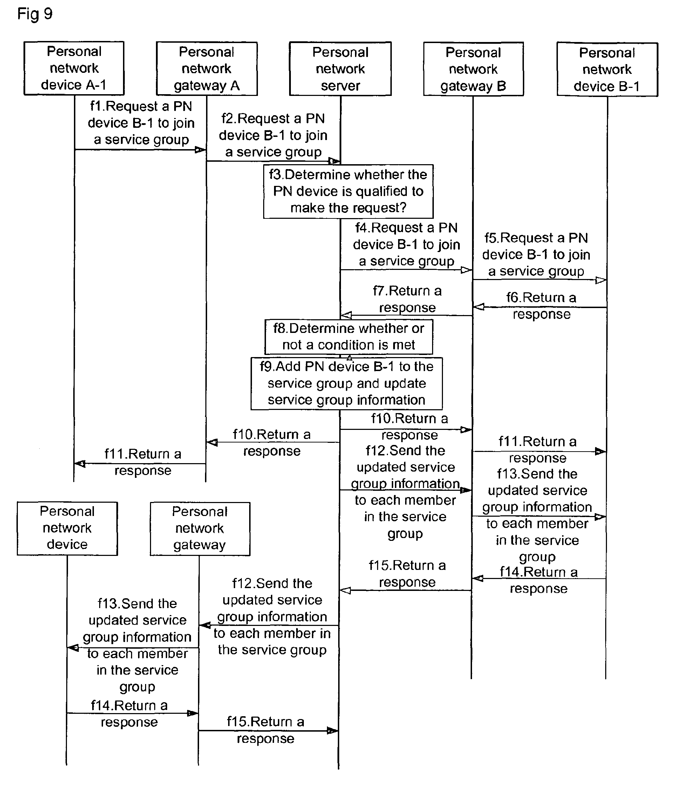

      Here, before the Step e1 above, PN device C-1 may need to acquire a list of existing service groups.
      Here, in the Steps e4 and e5 above, if the latest service group information is already returned to PN device C-1, then it is unnecessary in the Steps e7-e10 to send the latest service group information to PN device C-1.
   Case 2: a device is invited by another device, which refers to a PN device (including a PN gateway), to join a service group, as shown in Fig. 9, the joining of the device to a service group mainly includes the following steps:
      f1, PN device A-1 invites PN device B-1 to join a service group.
      f2, PN gateway A sends the request of PN device A-1 to a PN server.
      f3, the PN server determines whether or not PN device A-1 is qualified to request PN device B-1 to join the service group.
      f4, the PN server sends the request to PN gateway B.
      f5, PN gateway B sends the request to PN device B-1.
      f6, PN device B-1 returns a response to PN gateway B.
      f7, PN gateway B returns a response to the PN server.
      f8, the PN server determines whether or not PN device B-1 meets a service group joining condition.
      f9, the device meeting the condition joins the service group, and then the information of the service group is updated.
      f10, the PN server returns a response to PN gateways A and B.
      f11, the PN gateways A and B respectively return a response to PN devices A-1 and B-1.
      f12, if the information of the service group is updated, then the PN server sends the updated information of the service group to each member in the service group.
      f13, a PN gateway receives the updated information of the service group and then forwards the received information to a PN device.
      f14, the PN device returns a response to a PN gateway.
      f15, the PN gateway returns a response to the PN server.

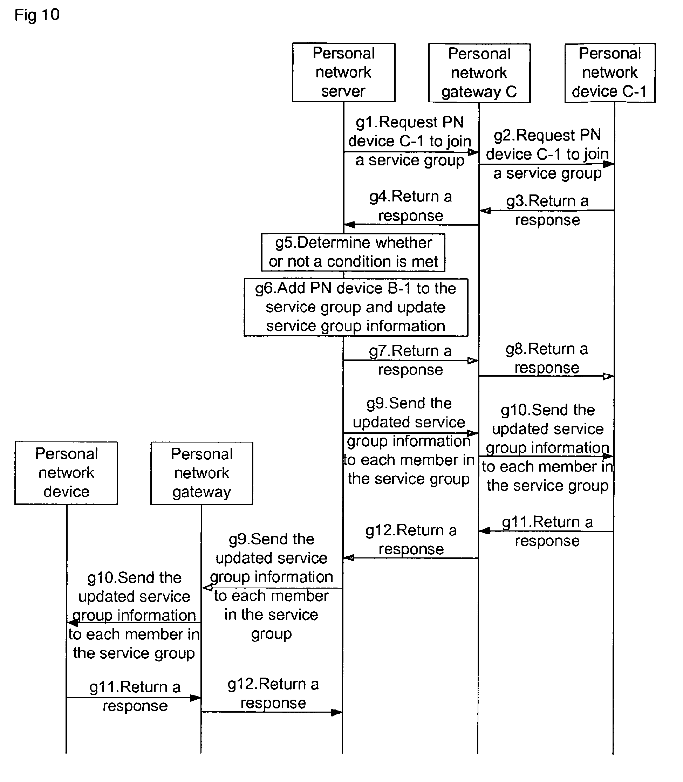

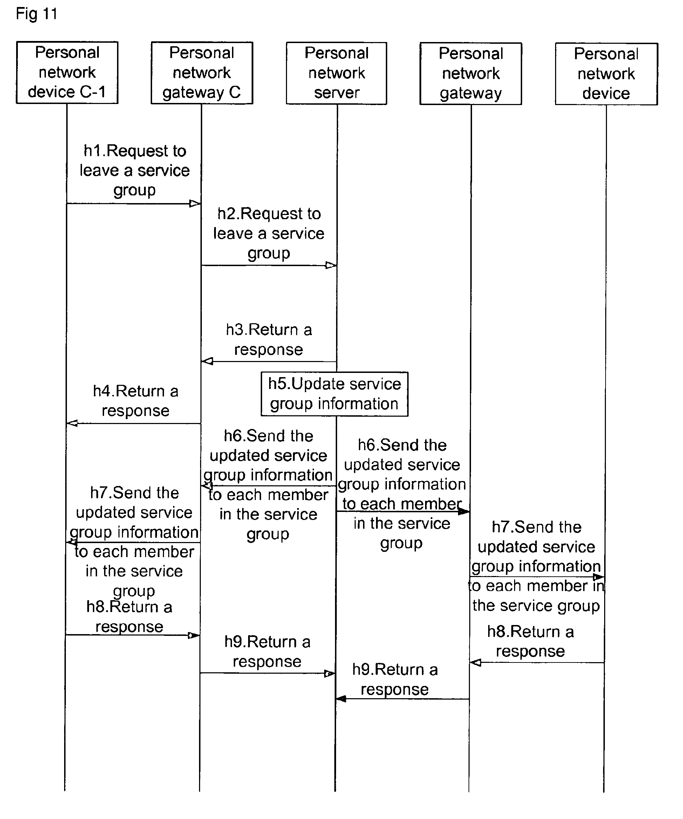

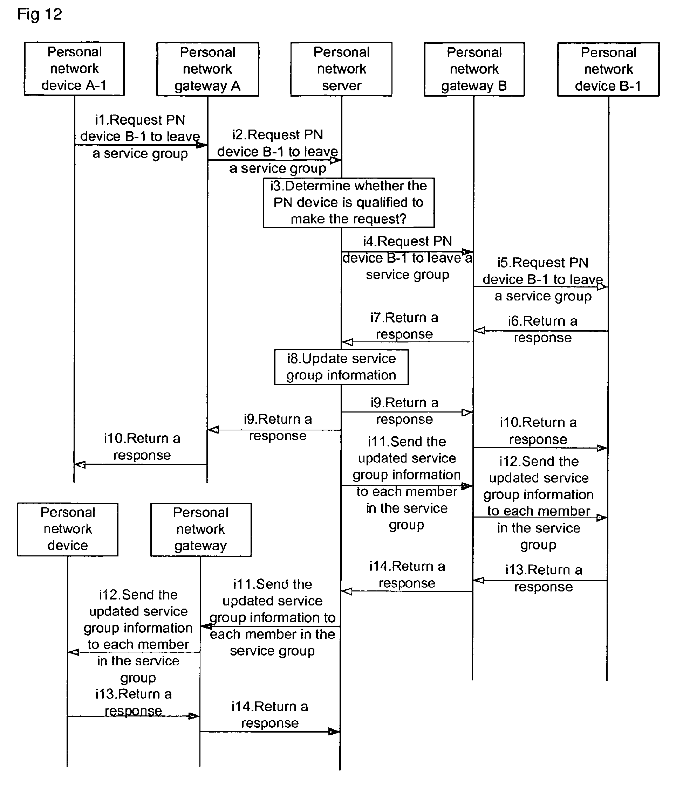

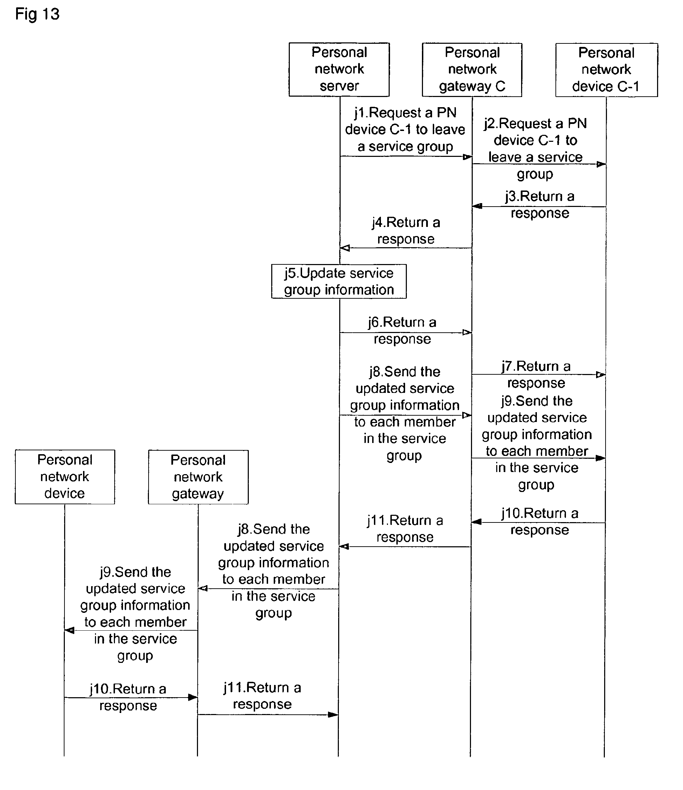

      Here, in the Steps f1-f15 above, PN device A-1 may belong to the service group or not, and in the latter case, the transmission of the updated information of the service group to PN device A-1 is unnecessary.
      The Step f3 above is optional here.
   Case 3: a device is invited by another device, which refers to a PN server, to join a service group, as shown in Fig. 10, the joining of the device to a service group mainly comprises the following steps:
      g1, the PN server invites a PN device C-1 to join a service group.
      g2, a PN gateway C sends the request to PN device C-1.
      g3, PN device C-1 returns a response to PN gateway C.
      g4, PN gateway C returns a response to the PN server.
      g5, the PN server determines whether or not PN device C-1 meets a service group joining condition.
      g6, the device meeting the condition joins the service group, and then the information of the service group is updated.
      g7, the PN server returns a response to PN gateway C.
      g8, PN gateway C returns a response to PN device C-1.
      g9, if the information of the service group is updated, then the PN server sends the updated information of the service group to each member in the service group.
      g10, a PN gateway receives the updated information of the service group and then forwards the received information to a PN device.
      g11, the PN device returns a response to a PN gateway.
      g12, the PN gateway returns a response to the PN server.
4. The leaving of a device from a service group includes the following three cases:
   Case 1: a device initiatively requests to leave a service group, as shown in Fig. 11, the leaving of a device from a service group mainly includes the following steps:
      h1, a PN device C-1 requests to leave a service group.
      h2, a PN gateway C sends the request to a PN server.
      h3, the PN server returns a response to PN gateway C.
      h4, PN gateway C returns the response to PN device C-1.
      h5, the PN server deletes the device from the service group and updates the information of the service group.
      h6, the PN server sends the updated information of the service group to each member in the service group.
      h7, a PN gateway receives the information and then sends the received information to a PN device.
      h8, the PN device returns a response to a PN gateway.
      h9, the PN gateway returns a response to the PN server.
   Case 2: a device is requested by another device, which refers to a PN device (including a PN gateway), to leave a service group, as shown in Fig. 12, the leaving of a device from a service group mainly includes the following steps:
      i1, PN device A-1 requests PN device B-1 to leave a service group.
      i2, PN gateway A sends the request of PN device A-1 to a PN server.
      i3, the PN server determines whether or not PN device A-1 is qualified to request PN device B-1 to leave the service group.
      i4, the PN server sends the request to a PN gateway B.
      i5, PN gateway B sends the request to PN device B-1.
      i6, PN device B-1 returns a response to PN gateway B.
      i7, PN gateway B returns a response to the PN server.
      i8, the PN server deletes the device from the service group and updates the information of the service group.
      i9, the PN server returns a response to PN gateways A and B.
      i10, PN gateways A and B respectively return a response to PN devices A-1 and B-1.
      i11, if the information of the service group is updated, then the PN server sends the updated information of the service group to each member in the service group.
      i12, a PN gateway receives the updated information of the service group and then forwards the received information to a PN device.
      i13. the PN device returns a response to a PN gateway.
      i14, the PN gateway returns a response to the PN server.
   Case 3: a device is requested by another device, which refers to a PN server, to leave a service group, as shown in Fig. 13, the leaving of a device from a service group mainly comprises the following steps:
      j1, the PN server notifies a PN device C-1 to leave a service group.
      j2, a PN gateway C sends the request to PN device C-1.
      j3, PN device C-1 returns a response to PN gateway C.
      j4, PN gateway C returns a response to the PN server.
      j5, the PN server deletes the device from the service group and updates the information of the service group.
      j6, the PN server returns a response to PN gateway C.
      j7, PN gateway C returns a response to PN device C-1.
      j8, if the information of the service group is updated, then the PN server sends the updated information of the service group to each member in the service group.
      j9, a PN gateway receives the updated information of the service group and then forwards the received information to a PN device.
      j10, the PN device returns a response to a PN gateway.
      j11, the PN gateway returns a response to the PN server.

The disclosure is exemplarily illustrated below, mainly aiming at the information update in a service group; when the information in a service group information table is updated, it is necessary to inform the member in the service group of the update, and any off-line member is informed when it is online again. The information in the information table of a service group may be updated when a service group is established, deleted, or there is a change in the members of a service group, the name of a service group or the strategy of the service group.

### Application example 1

There is a handset (PN gateway) and an MP4 (PN device) in the PNs of user A and user B. The MP4 of user A invites the MP4 of user B to establish a service group together. The establishing flow of the service group includes the following steps:
Step 101: the MP4 of user A sends a request for establishing the service group and the related information of a service group to the handset of user A, wherein the related information of the service group contains the name of the service group: SG_001, the strategy of the service group: free game, and the members of the service group: MP4AandMP4B.
Step 102: the handset of user A sends the request for establishing the service group and the related information of the service group to a PN server.
Step 103: the PN server sends the request for establishing the service group and the related information of the service group to the MP4 of user B according to the received related information of the service group.
Step 104: the handset of user B receives the request from the PN server and then sends the received request to the MP4 of user B.
Step 105: the MP4 of user B returns a response to the handset of user B to agree to establish the service group.
Step 106: the handset of user B returns a response to the PN server according to the response of the MP4 of user B.
Step 107: the PN server determines that the service group is successfully established according to the response of each PN device, returns a response to each PN device in the service group, and establishes a corresponding service group and a corresponding information table, wherein the information table contains the name of the service group: SG_001, the strategy of the service group: free game, and the members of the service group: MP4A and MP4B.
Step 108: the handsets of users A and B return a response to the MP4s of users A and B according to the responses received from the PN server.

### Application example 2

There is a handset (PN gateway) and an MP4 (PN device) in the PNs of user A, user B and user C, wherein the MP4s of users A and B have formed a service group with an identifier 'SG_001'. The joining of the device to the service group includes the following steps:
Step 201: the MP4 of user C requests to join the service group SG_001.
Step 202: the handset of user C sends the request to a PN server.
Step 203: the PN server determines whether or not the device meets a service group joining condition.
Step 204: the PN server returns a response to the handset of user C according to the result of the determination to agree to the joining.
Step 205: the handset of user C returns the response to the MP4 of user C.
Step 206: the PN server updates the information table of the service group.
Step 207: the PN server sends the updated information of the service group to each member in the service group.
Step 208: the handsets of users A, B and C receive the information and then send the received information to corresponding MP4s.
Step 209: the MP4s return a response to corresponding handsets.
Step 210: each handset returns a response to the PN server.

### Application example 3

There is a handset (PN gateway) and an MP4 (PN device) in the PNs of user A, user B, and user C, wherein the MP4s of users A, B, and C have formed a service group with an identifier 'SG 001'. The leaving of the device from the service group includes the following steps:
Step 301: a PN server notifies the MP4 of user C to leave the service group SG_001.
Step 302: the handset of user C sends the request to the MP4 of user C.
Step 303: the MP4 of user C returns a response to the handset of user C to agree to the leaving.
Step 304: the handset of user C returns a response to the PN server.
Step 305: the PN server deletes the device from the service group and updates the information of the service group.
Step 306: the PN server returns a response to the handset of user C.
Step 307: the handset of user C returns a response to the MP4 of user C.
Step 308: the PN server sends the updated information of the service group to each member in the service group.
Step 309: the handsets of users A and B receive the updated information of the service group and then send the received information to the MP4s of users A and B.
Step 310: the MP4s return a response to corresponding handsets.
Step 311: the handsets of users A and B respectively return a response to the PN server.

### Application example 4

There is a handset (PN gateway) and an MP4 (PN device) in the PNs of user A and user B, wherein the MP4s of users A and B have formed a service group with an identifier 'SG_001'. The deletion of the service group includes the following steps:
Step 401: a PN server sends a request for deleting the service group to each member in the service group SG_001.
Step 402: the handsets of users A and B receive the request from the PN server and then send the received request to corresponding MP4s.
Step 403: the MP4s return a response to corresponding handsets to agree to the deletion.
Step 404: the handsets of users A and B return a response to the PN server according to the responses of the MP4s.
Step 405: the PN server determines that the service group is successfully deleted according to the responses of the MP4s of users A and B, returns a response to each PN device in the service group, and deletes a corresponding service group.
Step 406: the handsets of users A and B return a response to the MP4s of users A and B according to the responses received from the PN server.

A system for managing a service group comprises: a management unit configured to manage the service group by establishing the service group and the information table thereof and updating the service group and the information table thereof.

Here, the information table, which is an information table for managing the service group, includes at least one of: a name of the service group, an identifier of the service group, the strategy information of the service group, the member information of the service group and service type information.

In the system, when the management unit is further configured to establish the service group, a personal network (PN) server determines that the service group can be established successfully according to a response of each device to a request for establish the service group and related information of the service group, and establishes the information table for the service group.

In the system, when updating the service group, the management unit is further configured to delete the service group, add a PN device to the service group, enable a PN device to leave the service group and update the information table, wherein when deleting the service group, adding the PN device to the service group and enabling the PN device to leave the service group, a caused update of the related information of the service group is achieved by updating the established information table, wherein

Wherein the deletion of the service group includes: the PN server determines that a service group can be deleted successfully according to a response of each PN device to a request for deleting the service group, and deletes the service group;
Wherein the addition of the PN device to the service group includes: the PN server receives a request of the PN device for joining the service group, determines that joining the device to the service group is allowed, and then adds the PN device to the service group and updates the related information of the service group;
wherein enabling the PN device to leave the service group includes : the PN server receives a request for enabling the PN device to leave the service group, deletes the PN device from the service group and updates the related information of the service group.

The aforementioned is merely the preferred embodiments of the disclosure but shall not limit to the protection scope of the disclosure.

## Claims

1. A method for managing a service group, comprising: managing the service group by establishing the service group and an information table thereof and updating the service group and the information table thereof;
when updating the service group, the method further comprises each of the following: adding a PN device to the service group, enabling a PN device to leave the service group, deleting the service group, updating the information table; when adding the PN device to the service group , or enabling the PN device to leave the service group, or deleting the service group, a caused update of the related information of the service group is achieved by updating the established information table;
**characterized in that**, adding the PN device to the service group comprises: receiving, by a PN server, a request of the PN device for joining the service group, determining (e3, f8, g5) that joining the service group is allowed, and then adding (e6, f9, g6) the PN device to the service group and updating the related information of the service group;
wherein enabling the PN device to leave the service group comprises: receiving, by the PN server, a request for enabling the PN device to leave the service group, deleting (h5, i8, j5) the PN device from the service group and updating the related information of the service group; and
wherein deleting the service group comprises: determining (c8, d6), by the PN server, that the service group can be deleted successfully according to a response of each PN device to a request for deleting the service group, and deleting the service group.

2. The method according to claim 1, wherein the information table is an information table for managing the service group; and
the information table comprises at least one of: a name of the service group, an identifier of the service group, strategy information, member information and service type information.

3. The method according to claim 1, wherein establishing the service group comprises: establishing, by the personal network (PN) server, the service group directly according to a request for establishing the service group, and sending an invitation to each invited PN device when there are invited PN devices that are invited to join the service group;
wherein when establishing the service group, the method further comprises: establishing the information table for the service group.

4. The method according to claim 1, wherein establishing the service group comprises: determining (a8), by the PN server, that the service group can be established successfully according to a response of each invited PN device to the request for establishing the service group and related information of the service group, and establishing the service group; and
wherein when establishing the service group, the method further comprises: establishing the information table for the service group.

5. The method according to claim 4, wherein the method further comprises: when a PN gateway is triggered to initiate the request for establishing the service group, sending (a3), by the PN gateway, the request for establishing the service group and the related information of the service group to the PN server;
sending (a4), by the PN server, the request for establishing the service group and the related information of the service group to each PN device corresponding to a member in the service group; and
establishing (a8), by the PN server, the service group when the PN server determines that the service group can be established successfully according to the response returned from each PN device; or
the method further comprises: when the PN device is triggered to initiate the request for establishing the service group, sending (a2), by the PN device, the request for establishing the service group and the related information of the service group to the PN gateway to which the PN device belongs;
sending (a2), by the PN gateway, the request for establishing the service group and the related information of the service group to the PN server;
sending (a4), by the PN server, the request for establishing the service group and the related information of the service group to each PN device corresponding to a member in the service group; and
establishing (a8), by the PN server, the service group when the PN server determines that the service group can be established successfully according to the response returned from each PN device; or
the method further comprises: when the PN server is triggered to initiate the request for establishing the service group, sending (b2), by the PN server, the request for establishing the service group and the related information of the service group to each PN device corresponding to a member in the service group; and
establishing (b6), by the PN server, the service group when the PN server determines that the service group can be established successfully according to the response returned from each PN device.

6. The method according to claim 5, wherein the method further comprises: sending the related information of the service group by including it in the request for establishing the service group or sending the related information of the service group and the request for establishing the service group separately when the PN gateway or the PN device is triggered to send the request for establishing the service group and the related information of the service group.

7. The method according to claim 4, wherein the method further comprises: when a PN gateway is triggered to initiate the request for deleting the service group, sending (c3), by the PN gateway, the request for deleting the service group to the PN server; sending (c4), by the PN server, the request for deleting the service group to each PN device corresponding to a member in the service group; and deleting (c8), by the PN server, the service group when the PN server determines that the service group can be deleted successfully according to the response returned from each PN device; or
the method further comprises: when the PN device is triggered to initiate the request for deleting the service group, sending (c2), by the PN device, the request for deleting the service group to the PN gateway to which the PN device belongs; sending (c3), by the PN gateway, the request for deleting the service group to the PN server; sending (c4), by the PN server, the request for deleting the service group to each PN device corresponding to a member in the service group; and deleting (c8), by the PN server, the service group when the PN server determines that the service group can be deleted successfully according to the response returned from each PN device; or
the method further comprises: when the PN server is triggered to initiate the request for deleting the service group, sending (d2), by the PN server, the request for deleting the service group to each PN device corresponding to a member in the service group; and deleting (d6), by the PN server, the service group when the PN server determines that the service group can be deleted successfully according to the response returned from each PN device.

8. The method according to claim 7, wherein the method further comprises: when the PN gateway or the PN device is triggered, and before the request for deleting the service group is sent, requesting (y1, y2) the related information of the service group from the PN server;
the method further comprises: when the PN gateway or the PN device is triggered, and when sending the request for deleting the service group, carrying an identifier of the service group to be deleted in the request for deleting the service group.

9. The method according to claim 4, wherein the method further comprises: when a PN device initiates a request for joining the service group initiatively, sending (e1), by the PN device, the request for joining the service group to a PN gateway to which the PN device belongs; sending (e2), by the PN gateway, the request for joining the service group to the PN server; adding (e3), by the PN server, the PN device to the service group when the PN server determines that joining the service group is allowed, updating (e6) the related information of the service group, and sending (e7) the updated related information of the service group to each PN device corresponding to a member in the service group; or
the method further comprises: when a PN device is invited by another PN device to join the service group by initiating a request for inviting the PN device to join the service group, sending (f1), by the another PN device, the request for inviting the PN device to join the service group to the PN gateway to which the another PN device belongs; sending (f2), by the PN gateway, the request for inviting the PN device to join the service group to the PN server; adding (f9), by the PN server, the PN device to the service group when the PN server determines (f8) that joining the service group is allowed and updating (f9) the related information of the service group, and sending (f12) the updated related information of the service group to each PN device corresponding to a member in the service group; or
the method further comprises: when a PN device is invited by the PN server to join the service group by initiating a request for inviting the PN device to join the service group, sending (g1), by the PN server, a request for inviting the PN device to join the service group to the PN gateway to which the PN device belongs; adding (g6), by the PN server, the PN device to the service group when the PN server determines (g5) that joining the service group is allowed and updating (g6) the related information of the service group, and sending (g9) the updated related information of the service group to each PN device corresponding to a member in the service group.

10. The method according to claim 4, wherein the method further comprises: when a PN device initiates a request for leaving the service group initiatively, sending (h1), by the PN device, the request for leaving the service group to the PN gateway to which the PN device belongs; sending (h2), by the PN gateway, the request for leaving the service group to the PN server; deleting (h5), by the PN server, the PN device from the service group and updating (h5) the related information of the service group, and sending (h6) the updated related information of the service group to each PN device corresponding to a member in the service group; or
the method further comprises: when a PN device is requested by another PN device to leave the service group by initiating a request for requesting the PN device to leave the service group, sending (i1), by the another PN device, the request for requesting the PN device to leave the service group to the PN gateway to which the another PN device belongs; sending (i2), by the PN gateway, the request for requesting the PN device to leave the service group to the PN server; deleting (i8), by the PN server, the PN device from the service group when the PN server determines that leaving from the service group is allowed and updating (i8) the related information of the service group, and sending (i11) the updated related information of the service group to each PN device corresponding to a member in the service group; or
the method further comprises: when a PN device is requested by the PN server to leave the service group by initiating a request for requesting the PN device to leave the service group, sending (j1), by the PN server, the request for requesting the PN device to leave the service group to the PN gateway to which the PN device belongs; deleting (j5), by the PN server, the PN device from the service group and updating (j5) the related information of the service group, and sending (j8) the updated related information of the service group to each PN device corresponding to a member in the service group.

11. A system for managing a service group, comprising: a management unit configured to manage the service group by establishing the service group and the information table thereof and updating the service group and the information table thereof;
when updating the service group, the management unit is further configured to add a PN device to the service group, enable a PN device to leave the service group, delete the service group, and update the information table, when adding the PN device to the service group, or enabling the PN device to leave the service group, or deleting the service group, a caused update of the related information of the service group is achieved by updating the established information table, wherein the management unit is a PN server;
**characterized in that**, adding the PN device to the service group comprises: the PN server receives a request of the PN device for joining the service group, determines that joining the service group is allowed, and then adds the PN device to the service group and updates the related information of the service group;
wherein enabling the PN device to leave the service group comprises: the PN server receives a request for enabling the PN device to leave the service group, deletes the PN device from the service group and updates the related information of the service group; and
wherein deleting the service group comprises: the PN server determines that the service group can be deleted successfully according to a response of each PN device to a request for deleting the service group, and deletes the service group.

12. The system according to claim 11, wherein the information table is an information table for managing the service group; and
the information table comprises at least one of: a name of the service group, an identifier of the service group, strategy information, member information and service type information.

13. The system according to claim 11 or 12, wherein when the management unit is further configured to establish the service group, the personal network (PN) server determines that the service group can be established successfully according to a response of each invited device to a request for establish the service group and related information of the service group, and establishes the information table for the service group.

## Patentansprüche

1. Verfahren zur Verwaltung einer Dienstgruppe, umfassend: Verwalten der Dienstgruppe durch Herstellen der Dienstgruppe und einer Informationstabelle davon und Aktualisieren der Dienstgruppe und deren Informationstabelle;
wobei bei der Aktualisierung der Dienstgruppe das Verfahren die nachfolgenden Schritte jeweils umfasst: Hinzufügen eines PN-Geräts zur Dienstgruppe, Ermöglichen, dass ein PN-Gerät die Dienstgruppe verlässt, Löschen der Dienstgruppe, Aktualisieren der Informationstabelle; wobei bei Hinzufügen des PN-Geräts zur Dienstgruppe oder Ermöglichen, dass ein PN-Gerät die Dienstgruppe verlässt, oder Löschen der Dienstgruppe eine veranlasste Aktualisierung der diesbezüglichen Daten der Dienstgruppe durch Aktualisieren der hergestellten Informationstabelle erreicht wird,
**dadurch gekennzeichnet dass** das Hinzufügen eines PN-Geräts zur Dienstgruppe umfasst: Empfangen einer Anfage des PN-Geräts zur Aufnahme in die Dienstgruppe durch einen PN-Server, Feststellen {e3, f8, g5), dass die Aufnahme in die gruppe erlaubt ist, gefolgt durch Hinzufügen (e6, f9, g6) des PN-Geräts zur Dienstgruppe und Aktualisieren der diesbezüglichen Daten der Dienstgruppe;
wobei das Ermöglichen, dass das PN-Gerät die Dienstgruppe verlässt, umfasst: Empfangen einer Anfrage des PN-Geräts zur Ermöglichung des Verlassens der Dienstgruppe durch den PN-Server, Löschen (h5, i8, j5) des PN-Geräts aus der Dienstgruppe und Aktualisieren der diesbezüglichen Daten der Dienstgruppe und
wobei das Löschen der Dienstgruppe umfasst: Ermitteln (c8, d6) durch den PN-Server, dass die Dienstgruppe erfolgreich gelöscht werden kann, je nach einer Antwort jedes PN-Geräts auf eine Löschungsanfrage der Dienstgruppe, und Löschen der Dienstgruppe.

2. Verfahren nach Anspruch 1, wobei die Informationstabelle eine Informationstabelle zur Verwaltung der Dienstgruppe ist, und
die Informationstabelle mindestens eines der nachfolgenden Elemente umfasst: eine Bezeichnung der Dienstgruppe, eine Kennung der Dienstgruppe, Strategiedaten, Mitgliedsdaten und Daten über die Art des Dienstes.

3. Verfahren nach Anspruch 1, wobei das Herstellen der Dienstgruppe umfasst: unmittelbares Herstellen der Dienstgruppe durch den PN-Server auf eine Anfrage zur Herstellung der Dienstgruppe hin und Senden einer Einladung an jedes eingeladene PN-Gerät, wenn eingeladene PN-Geräte vorhanden sind, die zum Beitritt zur Dienstgruppe eingeladen sind,
wobei bei der Herstellung der Dienstgruppe das Verfahren ferner umfasst: Erstellen der Informationstabelle der Dienstgruppe.

4. Verfahren nach Anspruch 1, wobei das Herstellen der Dienstgruppe umfasst: Festellen (a8) durch den PN-Server, dass die Dienstgruppe erfolgreich hergestellt werden kann, je nach einer Antwort jedes eingeladenen PN-Geräts auf eine Herstellungsanfrage der Dienstgruppe und diesbezüglichen Daten der Dienstgruppe und Herstellen der Dienstgruppe und
wobei bei der Herstellung der Dienstgruppe das Verfahren ferner umfasst: Erstellen der Informationstabelle der Dienstgruppe.

5. Verfahren nach Anspruch 4, wobei das Verfahren ferner umfasst: wenn ein PN-Gateway ausgelöst wird, um die Herstellungsanfrage der Dienstgruppe einzuleiten, Senden (a3) der Herstellungsanfrage der Dienstgruppe und der diesbezüglichen Daten der Dienstgruppe durch das PN-Gateway an den PN-Server,
Senden (a4) der Herstellungsanfrage der Dienstgruppe und der diesbezüglichen Daten der Dienstgruppe durch den PN-Server an jedes einem Mitglied der Dienstgruppe entsprechende PN-Gerät und
Herstellen (a8) der Dienstgruppe durch den PN-Server, wenn der PN-Server feststellt, dass die Dienstgruppe der Antwort jedes PN-Geräts entsprechend erfolgreich hergestellt werden kann, oder
das Verfahren ferner umfasst: wenn die Einleitung der Herstellungsanfrage der Dienstgruppe durch das PN-Gerät ausgelöst wird, Senden (a2) der Herstellungsanfrage der Dienstgruppe und der diesbezüglichen Daten der Dienstgruppe durch das PN-Gerät an das PN-Gateway, dem das PN-Gerät gehört,
Senden (a2) der Herstellungsanfrage der Dienstgruppe und der diesbezüglichen Daten der Dienstgruppe durch das PN-Gateway an den PN-Server;
Senden (a4) der Herstellungsanfrage der Dienstgruppe und der diesbezüglichen Daten der Dienstgruppe durch den PN-Server an jedes einem Mitglied der Dienstgruppe entsprechende PN-Gerät und
Herstellen (a8) der Dienstgruppe durch den PN-Server, wenn der PN-Server 2/6 feststellt, dass die Dienstgruppe der Antwort jedes PN-Geräts entsprechend erfolgreich hergestellt werden kann, oder
das Verfahren ferner umfasst: wenn die Einleitung der Herstellungsanfrage der Dienstgruppe durch den PN-Server ausgelöst wird, Senden (a2) der Herstellungsanfrage der Dienstgruppe und der diesbezüglichen Daten der Dienstgruppe durch den PN-Server an jedes einem Mitglied der Dienstgruppe entsprechende PN-Gerät,
Herstellen (b6) der Dienstgruppe durch den PN-Server, wenn der PN-Server feststellt, dass die Dienstgruppe der Antwort jedes PN-Geräts entsprechend erfolgreich hergestellt werden kann.

6. Verfahren nach Anspruch 5, wobei das Verfahren ferner umfasst:
Senden der diesbezüglichen Daten der Dienstgruppe durch Aufnahme in die Herstellungsanfrage der Dienstgruppe oder gesondertes Senden der diesbezüglichen Daten der Dienstgruppe und der Herstellungsanfrage der Dienstgruppe, wenn das Senden der Herstellungsanfrage der Dienstgruppe und der diesbezüglichen Daten der Dienstgruppe durch das PN-Gateway oder -Gerät ausgelöst wird.

7. Verfahren nach Anspruch 4, wobei das Verfahren ferner umfasst: wenn die Einleitung der Löschungsanfrage der Dienstgruppe durch ein PN-Gateway ausgelöst wird, Senden (c3) der Löschungsanfrage der Dienstgruppe durch das PN-Gateway an den PN-Server, Senden (c4) der Löschungsanfrage der Dienstgruppe durch den PN-Server an jedes einem Mitglied der Dienstgruppe entsprechende PN-Gerät und Löschen (c8) der Dienstgruppe durch den PN-Server, wenn der PN-Server feststellt, dass die Dienstgruppe der Antwort jedes PN-Geräts entsprechend erfolgreich gelöscht werden kann, oder
das Verfahren ferner umfasst: wenn die Einleitung der Löschungsanfrage der Dienstgruppe durch das PN-Gerät ausgelöst wird, Senden (c2) der Löschungsanfrage der Dienstgruppe an das PN-Gateway, dem das PN-Gerät gehört, Senden (c3) der Löschungsanfrage der Dienstgruppe durch das PN-Gateway an den PN-Server, Senden (c4) der Löschungsanfrage der Dienstgruppe durch den PN-Server an jedes einem Mitglied der Dienstgruppe entsprechende PN-Gerät und Löschen (c8) der Dienstgruppe durch den PN-Server, wenn der PN-Server feststellt, dass die Dienstgruppe der Antwort jedes PN-Geräts entsprechend erfolgreich gelöscht werden kann, oder
das Verfahren ferner umfasst: wenn die Einleitung der Löschungsanfrage der Dienstgruppe durch den PN-Server ausgelöst wird, Senden (d2) der Löschungsanfrage der Dienstgruppe durch den PN-Server an jedes einem Mitglied der Dienstgruppe entsprechende PN-Gerät, und Löschen (d6) der Dienstgruppe durch den PN-Server, wenn der PN-Server feststellt, dass die Dienstgruppe der Antwort jedes PN-Geräts entsprechend erfolgreich gelöscht werden kann.

8. Verfahren nach Anspruch 7, wobei das Verfahren ferner umfasst:
wenn das PN-Gateway oder das PN-Gerät getriggert wird und vor dem Absenden der Löschungsanfrage der Dienstgruppe, Anfordern (y1, y2) der diesbezüglichen Daten der Dienstgruppe beim PN-Server;
das Verfahren ferner umfasst: wenn das PN-Gateway oder das PN-Gerät getriggert wird und beim Senden der Löschungsanfrage der Dienstgruppe, Tragen einer Kennung der zu löschenden Dienstgruppe in der Löschungsanfrage der Dienstgruppe.

9. Verfahren nach Anspruch 4, wobei das Verfahren ferner umfasst: wenn ein PN-Gerät eine Beitrittsanfrage zur Dienstgruppe positiv einleitet, Senden (e1) der Beitrittsanfrage zur Dienstgruppe durch das PN-Gerät an ein PN-Gateway, dem das PN-Gerät gehört; Senden (e2) der Beitrittsanfrage zur Dienstgruppe durch das PN-Gateway an den PN-Server; Hinzufügen (e3) des PN-Geräts zur Dienstgruppe durch den PN-Server, wenn der PN-Server feststellt, dass der Beitritt zur Dienstgruppe erlaubt ist, Aktualisieren (e6) der diesbezüglichen Daten der Dienstgruppe und Senden (e7) der aktualisierten Daten der Dienstgruppe an jedes einem Mitglied der Dienstgruppe entsprechende PN-Gerät oder
das Verfahren ferner umfasst: wenn ein PN-Gerät von einem anderen PN-Gerät durch Einleiten einer Einladungsanfrage an das PN-Gerät zum Beitreten zur Dienstgruppe zum Beitreten zur Dienstgruppe eingeladen wird, Senden (f1) der Anfrage zur Einladung des PN-Geräts zum Beitreten zur Dienstgruppe durch ein anderes PN-Gerät an das PN-Gateway, dem das andere PN-Gerät gehört, Senden (f2) der Anfrage zur Einladung des PN-Geräts zum Beitreten zur Dienstgruppe durch das PN-Gateway an den PN-Server; Hinzufügen (f9) des PN-Geräts zur Dienstgruppe durch den PN-Server, wenn der PN-Server feststellt (f8), dass der Beitritt zur Dienstgruppe erlaubt ist und Aktualisieren (f9) der diesbezüglichen Daten der Dienstgruppe und Senden (f12) der aktualisierten Daten der Dienstgruppe an jedes einem Mitglied der Dienstgruppe entsprechende PN-Gerät oder
das Verfahren ferner umfasst: wenn ein PN-Gerät vom PN-Server zum Beitritt zur Dienstgruppe durch Einleiten einer Anfrage zur Einladung des PN-Geräts zum Beitreten zur Dienstgruppe eingeladen wird, Senden (g1) einer Anfrage zur Einladung des PN-Geräts zum Beitreten zur Dienstgruppe durch den PN-Server an das PN-Gateway, dem das PN-Gerät gehört; Hinzufügen (g6) des PN-Geräts zur Dienstgruppe durch den PN-Server, wenn der PN-Server feststellt (g5), dass der Beitritt zur Dienstgruppe erlaubt ist und Aktualisieren (g6) der diesbezüglichen Daten der Dienstgruppe und Senden (g9) der aktualisierten Daten der Dienstgruppe an jedes einem Mitglied der Dienstgruppe entsprechende PN-Gerät.

10. Verfahren nach Anspruch 4, wobei das Verfahren ferner umfasst: wenn ein PN-Gerät eine Austrittsanfrage positiv einleitet, Senden (h1) der Austrittsanfrage durch das PN-Gerät an ein PN-Gateway, dem das PN-Gerät gehört; Senden (h2) der Austrittsanfrage durch das PN-Gateway an den PN-Server; Löschen (h5) des PN-Geräts aus der Dienstgruppe und Aktualisieren (h5) der diesbezüglichen Daten der Dienstgruppe durch den PN-Server und Senden (h6) der aktualisierten Daten der Dienstgruppe an jedes einem Mitglied der Dienstgruppe entsprechende PN-Gerät oder
das Verfahren ferner umfasst: wenn ein PN-Gerät von einem anderen PN-Gerät durch Einleiten einer Austrittsanfrage an das PN-Gerät zum Austritt aus der Dienstgruppe aufgefordert wird, Senden (i1) der Anfrage zur Auffordering des PN-Geräts zum Austritt aus der Dienstgruppe durch ein anderes PN-Gerät an das PN-Gateway, dem das andere PN-Gerät gehört, Senden (i2) der Anfrage zur Aufforderung des PN-Geräts zum Austritt aus der Dienstgruppe durch das PN-Gateway an den PN-Server; Löschen (i8) des PN-Geräts durch den PN-Server, wenn der PN-Server feststellt, dass das Verlassen der Dienstgruppe erlaubt ist, und Aktualisieren (i8) der diesbezüglichen Daten der Dienstgruppe und Senden (i11) der aktualisierten Daten der Dienstgruppe an jedes einem Mitglied der Dienstgruppe entsprechende PN-Gerät oder
das Verfahren ferner umfasst: wenn ein PN-Gerät vom PN-Server durch Einleiten einer Austrittsaufforderung an das PN-Gerät zum Austritt aus der Dienstgruppe aufgefordert wird, Senden (j2) der Anfrage zur Aufforderung des PN-Geräts zum Austritt aus der Dienstgruppe durch den PN-Server an das PN-Gateway, dem das PN-Gerät gehört; Löschen (j5) des PN-Geräts aus der Dienstgruppe und Aktualisieren (j5) der diesbezüglichen Daten der Dienstgruppe durch den PN-Server und Senden (j8) der aktualisierten Daten der Dienstgruppe an jedes einem Mitglied der Dienstgruppe entsprechende PN-Gerät.

11. System zur Verwaltung einer Dienstgruppe, umfassend: eine Verwaltungseinheit, die derart konfiguriert ist, dass sie die Dienstgruppe durch Herstellen der Dientsgruppe und deren Informationstabelle und Aktualisieren der Dienstgruppe und deren Informationstabelle verwaltet;
wobei bei der Aktualisierung der Dienstgruppe die Verwaltungseinheit ferner derart konfiguriert ist, dass sie ein PN-Gerät zur Dienstgruppe hinzufügt, einem PN-Gerät das Verlassen der Dienstgruppe ermöglicht, die Dienstgruppe löscht und die Informationstabelle aktualisiert, wenn ein PN-Gerät zur Dienstgruppe hinzugefügt, einem PN-Gerät das Verlassen der Dienstgruppe ermöglicht oder die Dienstgurppe gelöscht wird, wird eine verursachte Aktualisierung der diesbezüglichen Daten der Dienstgruppe durch Aktualisieren der hergestellten Informationstabelle erreicht, wobei es sich bei der Verwaltungseinheit um einen PN-Server handelt;
**dadurch gekennzeichnet, dass** das Hinzufügen des PN-Geräts zur Dienstgruppe umfasst: Empfangen einer Beitrittsanfrage des PN-Geräts durch den PN-Server, Feststellen, dass der Beitritt zur Dienstgruppe erlaubt ist und Hinzufügen des PN-Geräts zur Dienstgruppe und Aktualisieren der diesbezüglichen Daten der Dienstgruppe;
wobei das Ermöglichen, dass das PN-Gerät die Dienstgruppe verlässt, umfasst: Empfangen einer Anfrage des PN-Geräts zur Ermöglichung des Verlassens der Dienstgruppe durch den PN-Server, Löschen des PN-Geräts aus der Dienstgruppe und Aktualisieren der diesbezüglichen Daten der Dienstgruppe und
wobei das Löschen der Dienstgruppe umfasst: Ermitteln durch den PN-Server, dass die Dienstgruppe erfolgreich gelöscht werden kann, je nach einer Antwort jedes PN-Geräts auf eine Löschungsanfrage der Dienstgruppe, und Löschen der Dienstgruppe.

12. System nach Anspruch 11, wobei die Informationstabelle eine Informationstabelle zur Verwaltung der Dienstgruppe ist, und
die Informationstabelle mindestens eines der nachfolgenden Elemente umfasst: eine Bezeichnung der Dienstgruppe, eine Kennung der Dienstgruppe, Strategiedaten, Mitgliedsdaten und Daten über die Art des Dienstes.

13. System nach Anspruch 11 oder 12, wobei die Verwaltungseinheit ferner derart konfiguriert ist, dass sie die Dienstgruppe herstellt, der PN-Server feststellt dass die Dienstgruppe erfolgreich hergestellt werden kann, je nach einer Antwort jedes eingeladenen PN-Geräts auf eine Herstellungsanfrage der Dienstgruppe und diesbezüglichen Daten der Dienstgruppe und die Informationstabelle der Dienstgruppe erstellt.

## Revendications

1. Procédé de gestion d'un groupe de services, comprenant l'étape consistant à : gérer le groupe de services en établissant le groupe de services et une table d'informations connexe, et mettre à jour le groupe de services et la table d'informations connexe ;
dans lequel, lors de la mise à jour du groupe de services, le procédé comprend en outre chacune des étapes ci-après consistant à : ajouter un dispositif de réseau PN au groupe de services, permettre au dispositif de réseau PN de quitter le groupe de services, supprimer le groupe de services, et mettre à jour la table d'informations ; lors de l'étape d'ajout du dispositif de réseau PN au groupe de services, ou de l'étape consistant à permettre au dispositif de réseau PN de quitter le groupe de services, ou de l'étape de suppression du groupe de services, une mise à jour occasionnée des informations connexes du groupe de services est obtenue en mettant à jour la table d'informations établie ;
**caractérisé en ce que**, l'étape d'ajout du dispositif de réseau PN au groupe de services comprend les étapes ci-après consistant à : recevoir, par le biais d'un serveur de réseau PN, une demande du dispositif de réseau PN visant à rejoindre le groupe de services, déterminer (e3, f8, g5) qu'il est autorisé de rejoindre le groupe de services, et ensuite ajouter (e6, f9, g6) le dispositif de réseau PN au groupe de services et mettre à jour les informations connexes du groupe de services ;
dans lequel l'étape consistant à permettre au dispositif de réseau PN de quitter le groupe de services comprend les étapes ci-après consistant à : recevoir, par le biais du serveur de réseau PN, une demande visant à permettre au dispositif de réseau PN de quitter le groupe de services, supprimer (h5, i8, j5) le dispositif de réseau PN du groupe de services et mettre à jour les informations connexes du groupe de services ; et
dans lequel l'étape de suppression du groupe de services comprend les étapes ci-après consistant à : déterminer (c8, d6), par le biais du serveur de réseau PN, que le groupe de services peut être supprimé correctement selon une réponse de chaque dispositif de réseau PN à une demande visant à supprimer le groupe de services, et supprimer le groupe de services.

2. Procédé selon la revendication 1, dans lequel la table d'informations est une table d'informations destinée à gérer le groupe de services ; et
la table d'informations comprend au moins : un nom du groupe de services, un identifiant du groupe de services, des informations de stratégie, des informations de membres et des informations de types de services.

3. Procédé selon la revendication 1, dans lequel l'étape d'établissement du groupe de services comprend les étapes ci-après consistant à : établir, par le biais du serveur de réseau personnel (PN), le groupe de services directement selon une demande visant à établir le groupe de services, et envoyer une invitation à chaque dispositif de réseau PN invité, lorsqu'il existe des dispositifs de réseau PN invités qui sont invités à rejoindre le groupe de services ;
dans lequel lors de l'établissement du groupe de services, le procédé comprend en outre l'étape ci-après consistant à : établir la table d'informations pour le groupe de services.

4. Procédé selon la revendication 1, dans lequel l'étape d'établissement du groupe de services comprend les étapes ci-après consistant à : déterminer (a8), par le biais du serveur de réseau PN, que le groupe de services peut être établi correctement selon une réponse de chaque dispositif de réseau PN invité à la demande visant à établir le groupe de services et des informations connexes du groupe de services, et établir le groupe de services ; et
dans lequel lors de l'établissement du groupe de services, le procédé comprend en outre l'étape ci-après consistant à : établir la table d'informations pour le groupe de services.

5. Procédé selon la revendication 4, dans lequel le procédé comprend en outre les étapes ci-après consistant à : lorsqu'une passerelle de réseau PN est déclenchée en vue d'initier la demande visant à établir le groupe de services, envoyer (a3), par le biais de la passerelle de réseau PN, la demande visant à établir le groupe de services et les informations connexes du groupe de services au serveur de réseau PN ;
envoyer (a4), par le biais du serveur de réseau PN, la demande visant à établir le groupe de services et les informations connexes du groupe de services à chaque dispositif de réseau PN correspondant à un membre dans le groupe de services ; et
établir (a8), par le biais du serveur de réseau PN, le groupe de services, lorsque le serveur de réseau PN détermine que le groupe de services peut être établi correctement selon la réponse renvoyée à partir de chaque dispositif de réseau PN ; ou
le procédé comprend en outre les étapes ci-après consistant à : lorsque le dispositif de réseau PN est déclenché en vue d'initier la demande visant à établir le groupe de services, envoyer (a2), par le biais du dispositif de réseau PN, la demande visant à établir le groupe de services et les informations connexes du groupe de services à la passerelle de réseau PN à laquelle appartient le dispositif de réseau PN ;
envoyer (a2), par le biais de la passerelle de réseau PN, la demande visant à établir le groupe de services et les informations connexes du groupe de services au serveur de réseau PN ;
envoyer (a4), par le biais du serveur de réseau PN, la demande visant à établir le groupe de services et les informations connexes du groupe de services à chaque dispositif de réseau PN correspondant à un membre dans le groupe de services ; et
établir (a8), par le biais du serveur de réseau PN, le groupe de services lorsque le serveur de réseau PN détermine que le groupe de services peut être établi correctement selon la réponse renvoyée à partir de chaque dispositif de réseau PN ; ou
le procédé comprend en outre les étapes ci-après consistant à : lorsque le serveur de réseau PN est déclenché en vue d'initier la demande visant à établir le groupe de services, envoyer (b2), par le biais du serveur de réseau PN, la demande visant à établir le groupe de services et les informations connexes du groupe de services à chaque dispositif de réseau PN correspondant à un membre dans le groupe de services ; et
établir (b6), par le biais du serveur de réseau PN, le groupe de services lorsque le serveur de réseau PN détermine que le groupe de services peut être établi correctement selon la réponse renvoyée à partir de chaque dispositif de réseau PN.

6. Procédé selon la revendication 5, dans lequel le procédé comprend en outre les étapes ci-après consistant à : envoyer les informations connexes du groupe de services en les incluant dans la demande visant à établir le groupe de services, ou envoyer les informations connexes du groupe de services et la demande visant à établir le groupe de services séparément lorsque la passerelle de réseau PN ou le dispositif de réseau PN est déclenché(e) en vue d'envoyer la demande visant à établir le groupe de services et les informations connexes du groupe de services.

7. Procédé selon la revendication 4, dans lequel le procédé comprend en outre les étapes ci-après consistant à : lorsqu'une passerelle de réseau PN est déclenchée en vue d'initier la demande visant à supprimer le groupe de services, envoyer (c3), par le biais de la passerelle de réseau PN, la demande visant à supprimer le groupe de services au serveur de réseau PN ; envoyer (c4), par le biais du serveur de réseau PN, la demande visant à supprimer le groupe de services à chaque dispositif de réseau PN correspondant à un membre dans le groupe de services ; et supprimer (c8), par le biais du serveur de réseau PN, le groupe de services, lorsque le serveur de réseau PN détermine que le groupe de services peut être supprimé correctement selon la réponse renvoyée à partir de chaque dispositif de réseau PN ; ou
le procédé comprend en outre les étapes ci-après consistant à : lorsque le dispositif de réseau PN est déclenché en vue d'initier la demande visant à supprimer le groupe de services, envoyer (c2), par le biais du dispositif de réseau PN, la demande visant à supprimer le groupe de services, à la passerelle de réseau PN à laquelle appartient le dispositif de réseau PN ; envoyer (c3), par le biais de la passerelle de réseau PN, la demande visant à supprimer le groupe de services, au serveur de réseau PN ; envoyer (c4), par le biais du serveur de réseau PN, la demande visant à supprimer le groupe de services, à chaque dispositif de réseau PN correspondant à un membre dans le groupe de services ; et supprimer (c8), par le biais du serveur de réseau PN, le groupe de services lorsque le serveur de réseau PN détermine que le groupe de services peut être supprimé correctement selon la réponse renvoyée à partir de chaque dispositif de réseau PN ; ou
le procédé comprend en outre les étapes ci-après consistant à : lorsque le serveur de réseau PN est déclenché en vue d'initier la demande visant à supprimer le groupe de services, envoyer (d2), par le biais du serveur de réseau PN, la demande visant à supprimer le groupe de services, à chaque dispositif de réseau PN correspondant à un membre dans le groupe de services ; et supprimer (d6), par le biais du serveur de réseau PN, le groupe de services, lorsque le serveur de réseau PN détermine que le groupe de services peut être supprimé correctement selon la réponse renvoyée à partir de chaque dispositif de réseau PN.

8. Procédé selon la revendication 7, dans lequel le procédé comprend en outre les étapes ci-après consistant à : lorsque la passerelle de réseau PN ou le dispositif de réseau PN est déclenché(e), et avant que la demande visant à supprimer le groupe de services ne soit envoyée, demander (y1, y2) les informations connexes du groupe de services à partir du serveur de réseau PN ;
le procédé comprend en outre les étapes ci-après consistant à : lorsque la passerelle de réseau PN ou le dispositif de réseau PN est déclenché(e) et lors de l'envoi de la demande visant à supprimer le groupe de services, transporter un identifiant du groupe de services à supprimer dans la demande visant à supprimer le groupe de services.

9. Procédé selon la revendication 4, dans lequel le procédé comprend en outre les étapes ci-après consistant à : lorsqu'un dispositif de réseau PN initie une demande visant à rejoindre le groupe de services provisoirement, envoyer (e1), par le biais du dispositif de réseau PN, la demande visant à rejoindre le groupe de services, à une passerelle de réseau PN à laquelle appartient le dispositif de réseau PN ; envoyer (e2), par le biais de la passerelle de réseau PN, la demande visant à rejoindre le groupe de services, au serveur de réseau PN ; ajouter (e3), par le biais du serveur de réseau PN, le dispositif de réseau PN au groupe de services lorsque le serveur de réseau PN détermine qu'il est autorisé de rejoindre le groupe de services, mettre à jour (e6) les informations connexes du groupe de services, et envoyer (e7) les informations connexes mises à jour du groupe de services à chaque dispositif de réseau PN correspondant à un membre dans le groupe de services ; ou
le procédé comprend en outre les étapes ci-après consistant à : lorsqu'un dispositif de réseau PN est invité par un autre dispositif de réseau PN à rejoindre le groupe de services en initiant une demande visant à inviter le dispositif de réseau PN à rejoindre le groupe de services, envoyer (f1), par ledit un autre dispositif de réseau PN, la demande visant à inviter le dispositif de réseau PN à rejoindre le groupe de services, à la passerelle de réseau PN à laquelle appartient ledit un autre dispositif de réseau PN ; envoyer (f2), par le biais de la passerelle de réseau PN, la demande visant à inviter le dispositif de réseau PN à rejoindre le groupe de services, au serveur de réseau PN ; ajouter (f9), par le biais du serveur de réseau PN, le dispositif de réseau PN au groupe de services, lorsque le serveur de réseau PN détermine (f8) qu'il est autorisé de rejoindre le groupe de services, et mettre à jour (f9) les informations connexes du groupe de services, et envoyer (f12), les informations connexes mises à jour du groupe de services, à chaque dispositif de réseau PN correspondant à un membre dans le groupe de services ; ou
le procédé comprend en outre les étapes ci-après consistant à : lorsqu'un dispositif de réseau PN est invité par le serveur de réseau PN à rejoindre le groupe de services en initiant une demande visant à inviter le dispositif de réseau PN à rejoindre le groupe de services, envoyer (g1), par le biais du serveur de réseau PN, une demande visant à inviter le dispositif de réseau PN à rejoindre le groupe de services, à la passerelle de réseau PN à laquelle appartient le dispositif de réseau PN ; ajouter (g6), par le biais du serveur de réseau PN, le dispositif de réseau PN au groupe de services lorsque le serveur de réseau PN détermine (g5) qu'il est autorisé de rejoindre le groupe de services, et mettre à jour (g6) les informations connexes du groupe de services, et envoyer (g9) les informations connexes mises à jour du groupe de services, à chaque dispositif de réseau PN correspondant à un membre dans le groupe de services.

10. Procédé selon la revendication 4, dans lequel le procédé comprend en outre les étapes ci-après consistant à : lorsqu'un dispositif de réseau PN initie une demande visant à quitter le groupe de services provisoirement, envoyer (h1), par le biais du dispositif de réseau PN, la demande visant à quitter le groupe de services, à la passerelle de réseau PN à laquelle appartient le dispositif de réseau PN ; envoyer (h2), par le biais de la passerelle de réseau PN, la demande visant à quitter le groupe de services, au serveur de réseau PN ; supprimer (h5), par le biais du serveur de réseau PN, le dispositif de réseau PN du groupe de services, et mettre à jour (h5) les informations connexes du groupe de services, et envoyer (h6) les informations connexes mises à jour du groupe de services, à chaque dispositif de réseau PN correspondant à un membre dans le groupe de services ; ou
le procédé comprend en outre les étapes ci-après consistant à : lorsqu'un dispositif de réseau PN est incité, par un autre dispositif de réseau PN, à quitter le groupe de services en initiant une demande visant à demander au dispositif de réseau PN de quitter le groupe de services, envoyer (i1), par le biais dudit un autre dispositif de réseau PN, la demande visant à demander au dispositif de réseau PN de quitter le groupe de services, à la passerelle de réseau PN à laquelle appartient ledit un autre dispositif de réseau PN ; envoyer (i2), par le biais de la passerelle de réseau PN, la demande visant à demander au dispositif de réseau PN de quitter le groupe de services, au serveur de réseau PN ; supprimer (i8), par le biais du serveur de réseau PN, le dispositif de réseau PN du groupe de services, lorsque le serveur de réseau PN détermine qu'il est autorisé de quitter le groupe de services, et mettre à jour (i8) les informations connexes du groupe de services, et envoyer (i11) les informations connexes mises à jour du groupe de services, à chaque dispositif de réseau PN correspondant à un membre dans le groupe de services ; ou
le procédé comprend en outre les étapes ci-après consistant à : lorsqu'un dispositif de réseau PN est incité, par le serveur de réseau PN, à quitter le groupe de services en initiant une demande visant à demander au dispositif de réseau PN de quitter le groupe de services, envoyer (j1), par le biais du serveur de réseau PN, la demande visant à demander au dispositif de réseau PN de quitter le groupe de services, à la passerelle de réseau PN à laquelle appartient le dispositif de réseau PN ; supprimer (j5), par le biais du serveur de réseau PN, le dispositif de réseau PN du groupe de services, et mettre à jour (j5) les informations connexes du groupe de services, et envoyer (j8) les informations connexes mises à jour du groupe de services, à chaque dispositif de réseau PN correspondant à un membre dans le groupe de services.

11. Système destiné à gérer un groupe de services, comprenant : une unité de gestion configurée de manière à gérer le groupe de services en établissant le groupe de services et la table d'informations connexe, et à mettre à jour le groupe de services et la table d'informations connexe ;
dans lequel, lors de la mise à jour du groupe de services, l'unité de gestion est en outre configurée de manière à ajouter un dispositif de réseau PN au groupe de services, permettre au dispositif de réseau PN de quitter le groupe de services, supprimer le groupe de services, et mettre à jour la table d'informations, lors de l'étape d'ajout du dispositif de réseau PN au groupe de services, ou de l'étape consistant à permettre au dispositif de réseau PN de quitter le groupe de services, ou de l'étape de suppression du groupe de services, une mise à jour occasionnée des informations connexes du groupe de services est obtenue en mettant à jour la table d'informations établie, dans lequel l'unité de gestion correspond à un serveur de réseau PN ;
**caractérisé en ce que**, l'étape d'ajout du dispositif de réseau PN au groupe de services comprend les étapes ci-après dans lesquelles : le serveur de réseau PN reçoit une demande du dispositif de réseau PN visant à rejoindre le groupe de services, détermine qu'il est autorisé de rejoindre le groupe de services, et ensuite ajoute le dispositif de réseau PN au groupe de services et met à jour les informations connexes du groupe de services ;
dans lequel l'étape consistant à permettre au dispositif de réseau PN de quitter le groupe de services comprend les étapes ci-après dans lesquelles : le serveur de réseau PN reçoit une demande visant à permettre au dispositif de réseau PN de quitter le groupe de services, supprime le dispositif de réseau PN du groupe de services et met à jour les informations connexes du groupe de services ; et
dans lequel l'étape de suppression du groupe de services comprend les étapes ci-après dans lesquelles : le serveur de réseau PN détermine que le groupe de services peut être supprimé correctement selon une réponse de chaque dispositif de réseau PN à une demande visant à supprimer le groupe de services, et supprime le groupe de services.

12. Système selon la revendication 11, dans lequel la table d'informations correspond à une table d'informations destinée à gérer le groupe de services ; et
la table d'informations comprend au moins l'un des éléments parmi : un nom du groupe de services, un identifiant du groupe de services, des informations de stratégie, des informations de membres et des informations de types de services.

13. Système selon la revendication 11 ou 12, dans lequel, lorsque l'unité de gestion est en outre configurée de manière à établir le groupe de services, le serveur de réseau personnel (PN) détermine que le groupe de services peut être établi correctement selon une réponse de chaque dispositif invité à une demande visant à établir le groupe de services et des informations connexes du groupe de services, et établit la table d'informations pour le groupe de services.
